Europäisches Patentamt
European Patent Office
Office européen des brevets

(19)

(11) Veröffentlichungsnummer: **0 224 679**
**A2**

(12)
# EUROPÄISCHE PATENTANMELDUNG

(21) Anmeldenummer: 86113851.9

(51) Int. Cl.⁴: **C08K 5/37** , C08L 27/06

(22) Anmeldetag: 07.10.86

(30) Priorität: 04.12.85 DE 3542862

(43) Veröffentlichungstag der Anmeldung:
10.06.87 Patentblatt 87/24

(84) Benannte Vertragsstaaten:
BE DE FR GB IT LU NL SE

(71) Anmelder: HÜLS AKTIENGESELLSCHAFT
Patentabteilung / PB 15 - Postfach 13 20
D-4370 Marl 1(DE)

(72) Erfinder: Kemper, Bruno, Dr.
Haardweg 4
D-4358 Haltern(DE)

(54) **Stabilisierte Formmassen auf der Basis von Polymerisaten des Vinylchlorids und Verwendung einer oder mehrerer Verbindungen als Costabilisatoren für Formmassen auf der Basis von Polymerisaten des Vinylchlorids.**

(57) Stabilisierte Formmassen auf der Basis von Polymerisaten des Vinylchlorids, die wenigstens einen Primärstabilisator und als Costabilisator Mercaptale oder Monothioacetale von Thioglykolsäureestern der Formeln I und/oder II

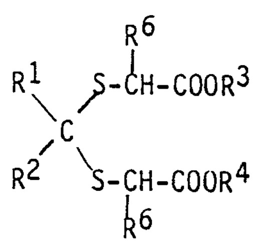

I

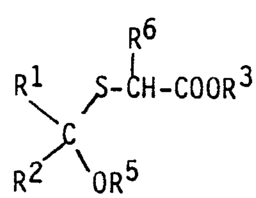

II

enthalten. Die in den Formmasen enthaltenen Costabilisatoren haben keinen unangenehmen Geruch, verbessern aber die Anfangsfarbe und auch die Gesamtstabilität der Formmassen.

EP 0 224 679 A2

Xerox Copy Centre

# Stabilisierte Formmassen auf der Basis von Polymerisaten des Vinylchlorids und Verwendung einer oder mehrerer Verbindungen als Costabilisatoren für Formmassen auf der Basis von Polymerisaten des Vinylchlorids

Die Erfindung betrifft harte oder weichgestellte, stabilisierte thermoplastische Formmassen auf Basis von Polyvinylchlorid oder im wesentlichen Vinylchlorid enthaltenden Polymerisaten.

Es ist bekannt, daß chlorhaltige Polymerisate durch die Einwirkung von Wärme, z.B. bei der Verarbeitung, leicht einen Abbau erleiden, der zu unerwünschten Verfärbungen und zu einer Beeinträchtigung der mechanischen Eigenschaften führt. Zur Vermeidung dieses Abbaus werden daher den Polymerisaten vor der Verarbeitung Stabilisatoren zugesetzt. Für Polyvinylchlorid und im wesentlichen Vinylchlorid enthaltende Mischpolymerisate verwendet man hierfür besonders Organozinnverbindungen, anorganische und organische Bleisalze, organische Antimonverbindungen oder Kombinationen aus Cadmium-und Bariumcarboxylaten. Diesen sogenannten Primärstabilisatoren werden häufig zur Verbesserung ihrer Wirksamkeit Costabilisatoren zugesetzt. Die Wirkungsweise von Primär-oder Costabilisatoren bzw. ihr Zusammenwirken (Synergismus) ist in der einschlägigen Literatur beschrieben, z. B. in der Publikation von L.I. Nass, "Heat Stabilizers" in Kirk-Othmer Encyclopedia of Chemical Technology, Vol. 12, 3. Edition, S. 225, Verlag John Wiley and Sons, 1980.

Die beschriebenen Stabilisatoren zeigen zwar eine ausreichende Wirksamkeit, jedoch sind Blei-, Antimon-und Cadmiumverbindungen aufgrund ihrer Toxizität nicht in allen Bereichen einsetzbar, besonders nicht in Verpackungsmaterialien für Nahrungsmittel oder im medizinischen Sektor. Organozinnverbindungen, von denen viele toxikologisch unbedenklich sind, eignen sich nicht für eine breite Anwendung, da sie zu teuer, d. h. schwer zugänglich bzw. nur in aufwendiger Weise herstellbar sind.

Es besteht daher ein Bedarf an Stabilisatorsystemen, die aus physiologisch unbedenklichen und preisgünstigen bzw. leicht zugänglichen Komponenten bestehen. Eine Möglichkeit bietet zwar der Einsatz von fettsauren Salzen von Calcium und Zink als Primärstabilisatoren, die gegebenenfalls durch Costabilisatoren wie Epoxyverbindungen, organischen Phosphiten, mehrwertigen Alkoholen oder 1.3-Diketonen ergänzt werden. Der Nachteil dieser Stabilisiersysteme liegt jedoch in der unzureichenden Langzeitstabilität und/oder der unbefriedigenden Anfangsfarbe der Polymermasse. Costabilisatoren für Stabilisatorsysteme auf Zinkbasis, die die Anfangs-und die Langzeitwirkung der Primärstabilisatoren deutlich verbessern, sind Mercaptoverbindungen wie Mercaptobernsteinsäurediester (EP-B 0 111 896 v. 15.12.83/27.06.84) und Thioglykolsäureester (EP-B 0 022 047 v. 24.06.80). Die sehr nachteilige Eigenschaft dieser Verbindungen ist jedoch ihr außerordentlich unangenehmer Geruch, der beim Einarbeiten in das Polymere und bei der Lagerung auftritt.

Diese Nachteile des Standes der Technik wurden überwunden durch die Bereitstellung von stabilisierten Formmassen auf der Basis von Polymerisaten des Vinylchlorids, die wenigstens einen Primärstabilisator und als Costabilisator eine oder mehrere Verbindungen der Formeln I und/oder II

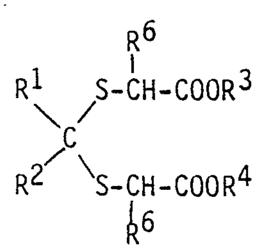

I

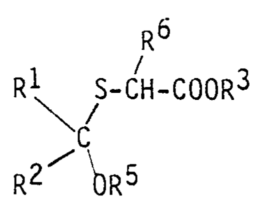

II

enthalten, in denen

$R^1$ und $R^2$ gleich oder verschieden sein können und für Wasserstoff, geradkettige oder verzweigte Alkyl- oder Alkenylgruppen mit 1 bis 20 Kohlenstoffatomen oder ggf. substituierte Arylreste stehen oder gemeinsam einen cycloaliphatischen Ring mit 5 -12 Kohlenstoffatomen bilden,

$R^3$ und $R^4$ gleich oder verschieden sein können und geradkettige oder verzweigte Alkylgruppen mit 4 -20 Kohlenstoffatomen bedeuten und

$R^5$ ebenfalls für eine geradkettige oder verzweigte Alkylgruppe mit 1 bis 22 Kohlenstoffatomen steht oder

gemeinsam mit $R^1$ oder $R^2$ Bestandteil eines heterocyclischen Ringes mit fünf bis neun Ringatomen ist, während $R^6$ ein Wasserstoff oder eine Gruppierung $-CH_2-COOR_3$ bedeutet.

Bevorzugt sind solche stabilisierten Formmassen, bei denen in der Formel I $R^1$ und $R^2$ geradkettige oder verzweigte Alkylgruppen mit 1 bis 20 Kohlenstoffatomen bedeuten oder gemeinsam zu einem cycloaliphatischen Ring mit 5 bis 9 Kohlenstoffatomen verbunden sind, oder $R^1$ eine, ggf. substituierte, Arylgruppe bedeutet, während $R^2$ eine geradkettige oder verzweigte Alkylgruppe mit 1 bis 20 Kohlenstoffatomen darstellt. Bevorzugt sind auch solche stabilisierten Formmassen, bei denen in der Formel II $R^1$ und $R^2$ geradkettige oder verzweigte Alkylreste mit 1 bis 20 Kohlenstoffatomen, $R^1$ auch Wasserstoff, $R^3$ geradkettige oder verzweigte Alkylgruppen mit 4 bis 20 Kohlenstoffatomen und $R^5$ geradkettige oder verzweigte Alkylgruppen mit 1 bis 22 Kohlenstoffatomen bedeuten oder $R^5$ geradkettige oder verzweigte Alkylgruppen mit 1 bis 22 Kohlenstoffatomen bedeuten oder $R^5$ mit $R^2$ zu einem heterocyclischen Ring mit 5 bis 9 Ringatomen verbunden ist.

Die stabilisierten Formmassen enthalten in bevorzugter Ausführungsform als Primärstabilisator(en) wenigstens ein fettsaures Salz von Calcium oder Zink und ggf. Gleitmittel und andere übliche Verarbeitungshilfsmittel.

Die Nachteile des Standes der Technik werden auch überwunden durch die Verwendung von einer oder mehrerer Verbindungen der Formeln I und/oder II

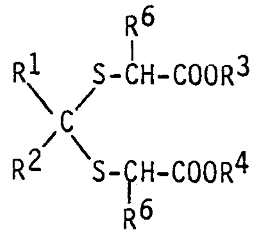

I

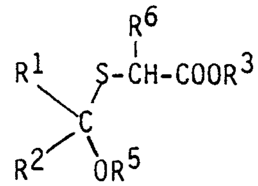

II

in denen

$R^1$ und $R^2$ gleich oder verschieden sind und Wasserstoff, geradkettige oder verzweigte Alkyl-oder Alkenylgruppen mit 1 bis 20 Kohlenstoffatomen oder ggf. substituierte Arylgruppen darstellen oder gemeinsam einen cycloaliphatischen Ring mit 5 -12 Kohlenstoffatomen bilden, $R^3$ und $R^4$ gleich oder verschieden sind und geradkettige oder verzweigte Alkylgruppen mit 4 -20 Kohlenstoffatomen bedeuten und $R^5$ ebenfalls für eine geradkettige oder verzweigte Alkylgruppe mit 1 bis 22 Kohlenstoffatomen steht oder gemeinsam mit $R^1$ oder $R^2$ Bestandteil eines heterocyclischen Ringes mit fünf bis neun Ringatomen ist, während $R^6$ ein Wasserstoff oder eine Gruppierung $-CH_2-COOR_3$ bedeutet, als Costabilisatoren für Formmassen auf der Basis von Polymerisaten des Vinylchlorids.

In den Formeln I und II können $R^1$, $R^2$, $R^3$, $R^4$ und $R^5$ eine Butyl-, Isobutyl-, Pentyl-, Isopentyl-, Hexyl-, Isohexyl-, Heptyl-, Isoheptyl-, Octyl-, Isooctyl-, Nonyl-, Isononyl-, Decyl-, Isodecyl-, Dodecyl-, Isododecyl-, Tridecyl-, Tetradecyl-, Hexadecyl-, Octadecyl oder Arachinylgruppe darstellen.

$R^1$, $R^2$ und $R^5$ können außerdem die Methyl-, Ethyl-, Propyl-oder Isopropylgruppe bedeuten und $R^5$ kann z. B. auch für den Behenylrest stehen. $R^1$ und $R^2$ können auch einen Propenyl-, Butenyl-, Pentenyl-, Hexenyl-, Heptenyl, Octenyl-, Nonenyl-, Decenyl-, Dodecenyl-, Tetradecenyl-, Hexadecenyl oder Octadecenylrest darstellen.

$R^1$ und $R^2$ können außerdem einen substituierten Cyclopentan-, Cyclohexan, Cycloheptan-, Cyclooctan-, Cyclononan-, Cyclodecan-, Cycloundecan-oder Cyclododecanring bilden.

Ferner können $R^1$ und $R^2$ auch für ggf. substituierte Arylgruppen stehen, wie beispielsweise die Phenyl-, o-Tolyl-, m-Tolyl-, p-Tolyl-, p-t-Butylphenyl-, p-Nonylphenyl-, p-Dodecylphenyl-, o-Hydroxyphenyl-, m-Hydroxyphenyl, p-Hydroxyphenyl-, o-Chlorphenyl-, m-Chlorphenyl-oder die p-Chlorphenylgruppe.

$R^5$ kann mit $R^1$ einen ggf. substituierten Tetrahydrofuran-, Tetrahydropyran-, 4,5-Benzodhydrofuran-oder einen 5,6-Benzodihydropyranring bilden.

Die erfindungsgemäßen stabilisierten Formmassen auf der Basis von Polymerisaten des Vinylchlorids enthalten somit als Costabilisatoren Derivate der Thioglykolsäureester, die an der Mercaptogruppe durch Mercaptalbildung oder Monothioacetalbildung maskiert sind. Diese Costabilisatoren zeigen nicht den Nachteil eines unangenehmen Geruchs. Dabei wurde beobachtet, daß diese Verbindungen die stabilisierende Wirkung von fettsauren Salzen von Zink und Calcium in nicht vorhersehbarem Maß verstärken. Der positive Einfluß der Mercaptale und Monothioacetale von Thioglykolsäureestern äußert sich sowohl in einer Verbesserung der Anfangsfarbe als auch in einer deutlichen Verlängerung der Gesamtstabilität.

Bei den Polymerisaten des Vinylchlorids, welche die Basis der erfindungsgemäßen stabilisierten Formmassen bilden, handelt es sich um Polyvinylchlorid oder Mischpolymerisate des Vinylchlorids, welche durch die bekannten Methoden hergestellt werden können, wie sie beispielsweise in der Monographie von Kainer, Polyvinylchlorid und Vinylchlorid-Mischpolymerisate (1965), Springer-Verlag, auf den Seiten 7 bis 59 beschrieben werden (Masse-, Suspensions-oder Emulsionspolymerisation). Die Mischpolymeren können bis zu 30 Gew.-% an Comonomeren, wie z. B. Vinylacetat, Vinylidenchlorid, Vinylether, Acrylnitril, Acrylsäureester, Maleinsäure-mono-oder -diester oder Olefine enthalten. Es lassen sich auch Pfropfpolymerisate einsetzen, deren Herstellung z. B. in der o. a. Monographie von Kainer auf den Seiten 111 bis 114 beschrieben wird.

Die Verbindungen der Formeln I und II können mit den gängigen Methoden der organischen Synthese hergestellt werden, wie sie z. B. in Houben-Weyl, Methoden der organischen Chemie, Bd. 9, (1955) S. 199 bis 205 beschrieben sind. Vorzugsweise werden Verbindungen der Formel I durch sauer katalysierte Kondensation von Thioglykolsäureestern mit Carbonylverbindungen unter Entfernen des Reaktionswassers hergestellt, und Verbindungen der Formel II entstehen beispielsweise durch säurekatalysierte Addition von Thioglykolsäureestern an offenkettige oder cyclische Enolether aliphatischer Carbonylverbindungen. Geeignete Carbonylverbindungen für die Herstellung von Verbindungen der Formel I sind z.B. Cyclohexanon, 4-t-Butylcyclohexanon, Cyclododecanon, Heptanon-4, 2.6-Dimethylheptanon-4, 2.6.8-Trimethylnonanon-4, Acetophenon und Propiophenon. Als Thioglykolsäurederivat werden vorzugsweise der Butylester, 2-Ethylhexylester oder der 5-Ethylnonylester eingesetzt. Ein geeignetes Herstellverfahren ist im experimentellen Teil beschrieben.

Die in der Formel II beschriebenen Monothioacetale werden beispielsweise durch Umsetzung der gleichen Thioglykolsäureester mit Enolethern wie Isobutylvinylether, Tridecylvinylether, Hexadecylvinylether, Octadecylvinylether oder cyclischen Enolethern wie z.B. Dihydropyran unter Säurekatalyse hergestellt. Ein geeignetes Verfahren ist im experimentellen Teil beschrieben.

Der Formel I entsprechende Verbindungen können beispielsweise sein:

1) Methylen-bis-(thioglykolsäurebutylester)
2) Methylen-bis-(thioglykolsäureethylhexylester)
3) Ethyliden-bis-(thioglykolsäurebutylester)
4) Ethyliden-bis-(thioglykolsäure-2-ethylhexylester)
5) Isopropyliden-bis-(thioglykolsäurebutylester)
6) Isopropyliden-bis-(thioglykolsäure-2-ethylhexylester)
7) 4,4-Heptyliden-bis-(thioglykolsäurebutylester)
8) 4,4-Heptyliden-bis-(thioglykolsäure-2-ethylhexylester)
9) 3,3-Pentyliden-bis-(thioglykolsäurebutylester)
10) 3,3-Pentyliden-bis-(thioglykolsäure-2-ethylhexylester)
11) Cyclohexyliden-bis-(thioglykolsäurebutylester)
12) Cyclohexyliden-bis-(thioglykolsäure-2-ethylhexylester)
13) Cyclododecyliden-bis-(thioglykolsäurebutylester)
14) Cyclododecyliden-bis-(thioglykolsäure-2-ethylhexylester)
15) 1-Phenylethyliden-bis-(thioglykolsäure-2-ethylhexylester)
16) 1-Phenylethyliden-bis-(thioglykolsäurebutylester)
17) 1-Phenylpropyliden-bis-(thioglykolsäurebutylester)
18) 1-Phenylpropyliden-bis-(thioglykolsäure-2-ethylhexylester)
19) 1(4-Chlorphenyl)-ethyliden-bis-(thioglykolsäurebutylester)
20) 1-(4-Chlorphenyl)-ethyliden-bis-(thioglykolsäure-2-ethylhexylester)
21) Methylen-bis-(mercaptobernsteinsäuredibutylester)
22) Ethyliden-bis-(mercaptobernsteinsäuredibutylester)
23) Isopropyliden-bis-(mercaptobernsteinsäuredibutylester)
24) 4,4-Heptyliden-bis-(mercaptobernsteinsäuredibutylester)
25) 3,3-Pentyliden-bis-(mercaptobernsteinsäuredibutylester)
26) Cyclohexyliden-bis-(mercaptobernsteinsäuredibutylester)

27) Cyclododecyliden-bis-(mercaptobernsteinsäuredibutylester)
28) 1-Phenylethyliden-bis-(mercaptobernsteinsäuredibutylester)
29) 1-Phenylpropyliden-bis-(mercaptobernsteinsäuredibutylester)
30) 1-(4-Chlorphenyl)-ethyliden-bis-(mercaptobernsteinsäuredibutyl ester)

Der Formel II entsprechende Verbindungen können beispielsweise sein:

1) S-(1-Ethoxyethyl)-thioglykolsäurebutylester
2) S-(1-Ethoxyethyl)-thioglykolsäure-2-ethylhexylester
3) S-(1-Ethoxyethyl)-mercaptobernsteinsäuredibutylester
4) S-(1-Isobutyloxyethyl)-thioglykolsäurebutylester
5) S-(1-Isobutyloxyethyl)-thioglykolsäure-2-ethylhexylester
6) S-(1-Isobutyloxyethyl)-mercaptobernsteinsäuredibutylester
7) S-(1-Isooctyloxyethyl)-thioglykolsäurebutylester
8) S-(1-Isooctyloxyethyl)-thioglykolsäure-2-ethylhexylester
9) S-(1-Isooctyloxyethyl)-mercaptobernsteinsäuredibutylester
10) S-(1-Nonyloxyethyl)-thioglykolsäurebutylester
11) S-(1-Nonyloxyethyl)-thioglykolsäure-2-ethylhexylester
12) S-(1-Nonyloxyethyl)-mercaptobernsteinsäuredibutylester
13) S-(1-Tridecyloxyethyl)-thioglykolsäurebutylester
14) S-(1-Tridecyloxyethyl)-thioglykolsäure-2-ethylhexylester
15) S-(1-Tridecyloxyethyl)-mercaptobernsteinsäuredibutylester
16) S-(1-Hexadecyloxyethyl)-thioglykolsäurebutylester
17) S-(1-Hexadecyloxyethyl)-thioglykolsäure-2-ethylhexylester
18) S-(1-Hexadecyloxyethyl)-mercaptobernsteinsäuredibutylester
19) S-(1-Octadecyloxyethyl)-thioglykolsäurebutylester
20) S-(1-Octadecyloxyethyl)-thioglykolsäure-2-ethylhexylester
21) S-(1-Octadecyloxyethyl)-mercaptobernsteinsäuredibutylester
22) S-(1-Tetrahydropyranyl)-thioglykolsäurebutylester
23) S-(1-Tetrahydropyranyl)-thioglykolsäure-2-ethylhexylester
24) S-(1-Tetrahydropyranyl)-mercaptobernsteinsäuredibutylester

In den erfindungsgemäßen stabilisierten Formmassen können als Primärstabilisatoren die üblichen Verbindungen eingesetzt werden, wie beispielsweise Metallseifen, Salze aromatischer Carbonsäuren und/oder Metallphenolate.

Als Metallseifen zu nennen sind vorzugsweise fettsaure Salze von Calcium, Barium oder Zink, die sich von Fettsäuren mit 8 bis 36, vorzugsweise 8 bis 22 Kohlenstoffatomen ableiten. Insbesondere kommen hier Caprylate, Caprinate, Laurate, Myristate, Palmitate, Stearate und Behenate in Frage. Ebenfalls sind verwendbar die Salze von verzweigten Fettsäuren wie 2-Ethylhexansäure, 2-Octyldecansäure oder Tetradecyloctadecansäure oder auch Hydroxyfettsäuren wie 9(10)-Hydroxystearinsäure oder 9,10-Dihydroxystearinsäure. Die Metallseifen können aus den Salzen einzelner Fettsäuren oder auch von Fettsäuregemischen, wie sie aus natürlichen Fetten gewonnen werden, bestehen. Als Salze aromatischer Carbonsäuren kommen besonders die Calcium-, Barium-und Zinksalze der Benzoesäure und der substituierten Benzoesäureester, insbesondere der alkylsubstituierten Benzoesäuren, in Betracht. Als Phenolate lassen sich einsetzen: Methylphenolate, t-Butylphenolate, Nonylphenolate, Dodecylphenolate oder Naphthenate des Calciums, Bariums oder Zinks.

In der Regel enthalten die stabilisierten Formmassen auf 100 Teile Polymerisat 0,02 bis 2, vorzugsweise 0,05 bis 0,5 Gewichtsteile Verbindungen der Formel I oder II. Die Primärstabilisatoren können in Mengen von 0,05 bis 5, vorzugsweise 0,1 bis 2 Gewichtsteilen pro 100 Gewichtsteile Polymerisat enthalten sein. Vorzugsweise enthalten die erfindungsgemäßen Formmassen auf 100 Teile Polymerisat 0,1 bis 3 Gewichtsteile Calciumseife und/oder 0,1 bis 3 Gewichtsteile Bariumseife und/oder 0,1 bis 3 Gewichtsteile Zinkseife. Die Seifen leiten sich vorzugsweise von Fettsäuren mit 8 bis 22 Kohlenstoffatomen ab und sind zusammen i. a. zu nicht mehr als 3 Gewichtsteilen in 100 Gewichtsteilen Polymerisat enthalten.

Die Herstellung der erfindungsgemäßen stabilisierten Formmassen kann durch übliche Methoden, z. B. durch einfaches mechanisches Vermischen der Komponenten in konventionellen Mischern erfolgen. Bei diesem Mischvorgang können weitere übliche Verarbeitungshilfsmittel eingearbeitet werden, wie z. B. Gleitmittel (Montanwachse oder Polyolpartialester, Weichmacher, Füllstoffe, Lichtstabilisatoren oder weitere Costabilisatoren wie z. B. epoxidierte Fettsäureester, Polyole, Phosphite (bevorzugt Alkyl-Arylphosphite)

oder 1.3-Diketone. Die homogene Verteilung der Stabilisatoren im PVC kann z. B. mit Hilfe eines Zweiwalzenmischers bei 150 bis 200 °C erfolgen. Zur weiteren Erläuterung der Erfindung und zum Nachweis des überraschenden technischen Fortschritts dienen die im folgenden beschriebenen Beispiele:

Herstellung der Verbindungen der Formel I

493,8 g (2,4 mol) Thioglykolsäureethylhexylester wurden in 600 ml Hexan gelöst und mit 3 g p-Toluolsulfonsäure-Monohydrat versetzt. Unter Rühren wurden 117,8 g (1,2 mol) Cyclohexanon zugegeben und die Mischung unter Rückfluß am Wasserabscheider erhitzt. Nach 12-stündiger Reaktionszeit waren 96 % des berechneten Reaktionswassers abgetrennt. Die Lösung wurde zweimal mit je 200 ml 3 %iger $NaHCO_3$-Lösung gewaschen, über $Na_2SO_4$ getrocknet und eingeengt. Nach Entfernen von Resten flüchtiger Bestandteile im Vakuum (ca. 0,2 mbar) bei 60 °C blieben 585 g (98 %) Cyclohexyliden-bis-(thioglykolsäureethylhexylester) als klares blaßgelbes Öl.

Unter identischen Bedingungen läßt sich das Verfahren auf die Kondensation anderer Ketone und anderer Thioglykolsäureester übertragen.

Herstellung der Verbindungen der Formel II

277 g (0,93 mol) Octadecylvinylether wurden in 700 ml Diethylether gelöst und bei 0 °C mit einer Lösung von 185 g (0,9 mol) Thioglykolsäureethylhexylester und 0,5 g p-Toluolsulfonsäure-Monohydrat in 250ml Diethylether versetzt. Die klare Reaktionsmischung wurde 2 Tage bei Raumtemperatur stehengelassen, dann mit 200 ml 3 %iger $NaHCO_3$-Lösung und zweimal mit je 200 ml Wasser gewaschen und eingeengt. Nach Entfernen von Resten flüchtiger Verbindungen im Vakuum (0,4 mbar) bei 90 °C blieben 450 g (98 %) S-1-Octadecyloxyethyl-thioglykolsäureethylhexylester als klares, farbloses Öl.

Das gleiche Verfahren läßt sich unter identischen Bedingungen auf die Addition anderer Thioglykolsäureester an andere Vinylether übertragen.

Herstellung und Prüfung der Walzfelle

Die Wirkung der Stabilisatorkombinationen wurde durch Bestimmung der statischen Thermostabilität von Walzfellen geprüft. Hierzu wurden die Stabilisatorkombinationen und gegebenenfalls Weichmacher und Verarbeitungshilfsmittel mit Polyvinylchlorid 1 Minute lang in einer Labormühle gemischt und anschließend auf einem Doppelwalzwerk bei einer Walzentemperatur von 170 °C im Gleichlauf im Verlauf von 5 Minuten zu 1 mm starken Walzfellen verarbeitet. Aus den Walzfellen wurden Streifen der Dimension 10 $\times$ 250 mm geschnitten, die anschließend in einem speziellen Ofen (Metrastat Typ Sigma) bei 180 °C thermisch belastet wurden. Die Probestreifen werden dabei kontinuierlich aus der Heizzone ausgefahren und zeigen durch die Farbveränderung die Wirkung der Stabilisatoren.

Aus folgenden Bestandteilen wurde eine Mischung A zusammengestellt:
(GT = Gewichtsteile)

-100 GT Suspensions-Polyvinylchlorid (K-Wert 70; VESTOLIT$^R$ S 7054; Hüls AG, Marl) -30 GT Dioctylphthalat
-0,3 GT Montanwachs
-0,5 GT Zinkstearat
-1,0 GT Calciumstearat

Zur Herstellung der erfindungsgemäßen Polyvinylchlorid-Formmassen B-E wurde die Mischung A mit der angegebenen Zusammensetzung durch folgende Zusätze ergänzt:

In B: 0,2 GT Cyclohexyliden-bis-(thioglykolsäure-2-ethylhexylester)
In C: 0,2 GT 1-Phenylethyliden-bis-(thioglykolsäure-2-ethylhexylester)
In D: 0,2 GT S-(1-Isobutyloxyethyl)thioglykolsäure-2-ethylhexylester
In E: 0,2 GT S-(1-Octadecyloxyethyl)thioglykolsäure-2-ethylhexylester
In F: 4,4-Heptyliden-bis-(thioglykolsäurebutylester)
In G: Cyclododecyliden-bis-(thioglykolsäure-2-ethylhexylester)
In H: S-(1-Octadecyloxyethyl)mercaptobernsteinsäuredihexylester)
In I: Mercaptobernsteinsäuredihexylester
In J: Thioglykolsäure-2-ethylhexylester

In K: S-(2-Methoxy-2-propyl)thioglykolsäure-2-ethylhexylester

Die Mischungen B-J wurden in der angegebenen Weise zu Probestreifen verarbeitet.

Die Tabelle gibt die Zeiten (in Minuten) an, bei denen die erste Verfärbung der Streifen bei 180 °C und der Stabilitätsabbruch (Schwarzfärbung) eintraten.

| | A | B | C | D | E | F | G | H | I | J | K |
|---|---|---|---|---|---|---|---|---|---|---|---|
| erste Verfärbung | 23 | 35 | 40 | 42 | 40 | 50 | 38 | 42 | 40 | 37 | 55 |
| Stabilitätsabbruch | 38 | 48 | 46 | 52 | 53 | 57 | 52 | 47 | 47 | 46 | 60 |

## Ansprüche

1. Stabilisierte Formmassen auf der Basis von Polymerisaten des Vinylchlorids, die wenigstens einen Primärstabilisator und als Costabilisator eine oder mehrere Verbindungen der Formeln I und/oder II

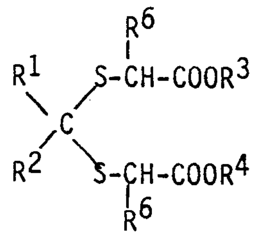

I

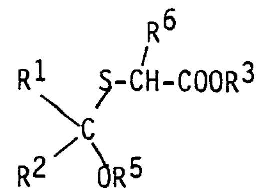

II

enthalten, in denen

$R^1$ und $R^2$ gleich oder verschieden sind und für Wasserstoff, geradkettige oder verzweigte Alkyl-oder Alkenylgruppen mit 1 bis 20 Kohlenstoffatomen oder ggf. substituierte Arylgruppen stehen oder gemeinsam einen cycloaliphatischen Ring mit 5 -12 Kohlenstoffatomen bilden,

$R^3$ und $R^4$ gleich oder verschieden sind und geradkettige oder verzweigte Alkylgruppen mit 4 -20 Kohlenstoffatomen bedeuten und

$R^5$ ebenfalls für eine geradkettige oder verzweigte Alkylgruppe mit 1 bis 22 Kohlenstoffatomen steht oder gemeinsam mit $R^1$ oder $R^2$ Bestandteil eines heterocyclischen Ringes mit fünf bis neun Ringatomen ist, während $R^6$ ein Wasserstoffatom oder eine Gruppierung $-CH_2-COOR_3$ bedeutet.

2. Stabilisierte Formmassen nach Anspruch 1,

dadurch gegekennzeichnet,

daß in der Formel I

$R^1$ und $R^2$ geradkettige oder verzweigte Alkylgruppen mit 1 bis 20 Kohlenstoffatomen bedeuten oder gemeinsam zu einem cycloaliphatischen Ring mit 5 bis 9 Kohlenstoffatomen verbunden sind oder $R^1$ eine, ggf. substituierte Arylgruppe bedeutet, während $R^2$ eine geradkettige oder verzweigte Alkylgruppe mit 1 bis 20 Kohlenstoffatomen darstellt.

3. Stabilisierte Formmassen nach Anspruch 1,

dadurch gekennzeichnet,

daß in der Formel II $R^1$ Wasserstoff und $R^2$ geradkettige oder verzweigte Alkylreste mit 1 bis 20 Kohlenstoffatomen, $R^3$ geradkettige oder verzweigte Alkylgruppen mit 4 bis 20 Kohlenstoffatomen und $R^5$ geradkettige oder verzweigte Alkylgruppen mit 1 bis 22 Kohlenstoffatomen bedeuten oder daß $R^5$ mit $R^2$ zu einem heterocyclischen Ring mit 5 bis 9 Ringatomen verbunden ist.

4. Stabilisierte Formmassen nach einem der Ansprüche 1 bis 3,

dadurch gekennzeichnet,

daß sie als Primärstabilisator(en) wenigstens ein fettsaures Salz von Calcium oder Zink und ggf. Gleitmittel und andere übliche Verarbeitungshilfsmittel enthalten.

5. Verwendung von einer oder mehrerer Verbindungen der Formeln I und/oder II

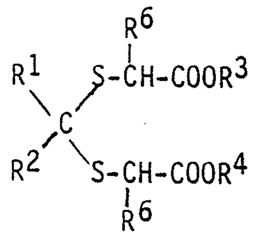

I

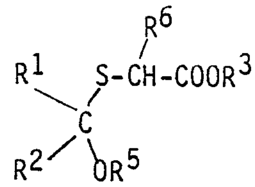

II

in denen
$R^1$ und $R^2$ gleich oder verschieden sind und Wasserstoff, geradkettige oder verzweigte Alkyl-oder Alkenylgruppen mit 1 bis 20 Kohlenstoffatomen oder ggf. substituierte Arylreste darstellen oder gemeinsam einen cycloaliphatischen Ring mit 5 -12 Kohlenstoffatomen bilden, $R^3$ und $R^4$ gleich oder verschieden sind und geradkettige oder verzweigte Alkylgruppen mit 4 -20 Kohlenstoffatomen bedeuten und $R^5$ ebenfalls für eine geradkettige oder verzweigte Alkylgruppe mit 1 bis 22 Kohlenstoffatomen steht oder gemeinsam mit $R^1$ oder $R^2$ Bestandteil eines heterocyclischen Ringes mit fünf bis neun Ringatomen ist, während $R^6$ ein Wasserstoffatom oder eine Gruppierung $-CH_2-COOR_3$ bedeutet, als Costabilisator(en) für Formmassen auf der Basis von Polymerisaten des Vinylchlorids.

6. Stabilisierte Formmassen nach Anspruch 1,
dadurch gekennzeichnet,
daß in der Formel II $R^1$ und $R^2$ geradkettige oder verzweigte Alkylreste mit 1 bis 20 Kohlenstoffatomen, $R^3$ geradkettige oder verzweigte Alkylgruppen mit 4 bis 20 Kohlenstoffatomen und $R^5$ geradkettige oder verzweigte Alkylgrupen mit 1 bis 22 Kohlenstoffatomen bedeuten oder daß $R^5$ mit $R^2$ zu einem heterocyclischen Ring mit 5 bis 9 Ringatomen verbunden ist.